# EUROPEAN PATENT SPECIFICATION

(11) **EP 3 438 617 B1**
(45) Date of publication and mention of the grant of the patent: **16.10.2019**
(21) Application number: 17382528.2
(22) Date of filing: 01.08.2017
(51) Int. Cl.: G01D 5/244, G01D 5/347

(54) **VERIFICATION METHOD FOR AN OPTOELECTRONIC MEASURING DEVICE, AND DEVICE**
VERIFIZIERUNGSVERFAHREN FÜR EINE VORRICHTUNG ZUR OPTOELEKTRONISCHEN MESSUNG SOWIE VORRICHTUNG
PROCÉDÉ DE VÉRIFICATION POUR DISPOSITIF DE MESURE OPTOÉLECTRONIQUE ET DISPOSITIF

(43) Date of publication of application: 06.02.2019
(73) Proprietor: FAGOR AUTOMATION S.COOP., 20500 Arrasate - Mondragon (ES)
(72) Inventor: URRA CHANDIA, Juan Carlos, 31200 Estella (ES); DE LA FUENTE PRADO, Pablo, 20550 Aretxabaleta (ES); MARTINEZ-TOLEDANO EGURROLA, Oscar, 20600 Eibar (ES)
(74) Representative: Igartua, Ismael

(56) References cited:
- EP-A1- 0 962 880
- US-A- 5 754 568
- US-A1- 2015 292 919
- US-B1- 6 483 104

## Description

### TECHNICAL FIELD

The present invention relates to verification methods for an optoelectronic measuring device, and particularly to methods for verifying if the determination of absolute positions is correct, and to absolute optoelectronic measuring devices.

### PRIOR ART

Optoelectronic measuring devices comprise a graduated scale with a plurality of marks engraved in it, and a read head facing the graduated scale which is movable with respect to said graduated scale in a measuring direction parallel to the graduated scale. The read head comprises a light emitter emitting a light beam towards the graduated scale, and a detection device receiving the light going through or reflected off the graduated scale, and a controller determining the position between the graduated scale and the read head depending on the light received by the detection device.

In absolute optoelectronic measuring devices, the marks on the graduated scale are distributed in a given manner in the measuring direction, such that they form different code sequences along the graduated scale, the absolute position of the read head thus being able to be determined at all times.

Patent document US5754568A discloses a device of this type, with an enhanced certainty that the determined absolute positions are correct. The read head of said device comprises two detection devices adjacent to one another in the measuring direction, such that they receive readings relative to different codes of the graduated scale. They determine whether or not the determined positions are correct by means of a series of comparisons.

### DISCLOSURE OF THE INVENTION

The object of the invention is to provide a verification method for an optoelectronic measuring device and an associated device, as defined in the claims.

A first aspect of the invention relates to a verification method for an optoelectronic measuring device. The optoelectronic measuring device comprises a graduated scale with a plurality of marks distributed one after another in a measuring direction and defining different code sequences, and a read head facing the graduated scale which is movable with respect to said graduated scale in the measuring direction and comprises at least one detection device.

The method comprises the steps of:
- emitting a first light beam towards the graduated scale with a first light emitter of the read head and determining the absolute position of the read head depending on the light received by the detection device after said first light beam is reflected off, or goes through, the graduated scale,
- subsequently emitting a second light beam towards the graduated scale with a second light emitter of the read head that is spaced from the first light emitter in the measuring direction, and determining the absolute position of the read head depending on the light received by the detection device after said second light beam is reflected off, or goes through, the graduated scale,
- comparing both determined absolute positions with one another, and
- determining if the determined absolute positions are correct depending on said comparison.

Therefore, it is a simple way to verify whether or not the absolute positions determined by the device are correct. Furthermore, the method only requires using an additional low-cost element (a light emitter), which results in adding additional certainty to the device in a cost-effective, and at the same time simple, manner.

A second aspect of the invention relates to an optoelectronic measuring device comprising a graduated scale with a plurality of marks distributed one after another in a measuring direction and defining different code sequences, and a read head facing the graduated scale which is movable with respect to said graduated scale in the measuring direction and comprises at least one detection device, and a controller communicated with said detection device.

The read head further comprises at least two light emitters spaced from one another in the measuring direction for illuminating the graduated scale with a respective light beam, and the detection device is suitable and configured for receiving the light emitted by both light emitters after being reflected off the graduated scale or after going through said graduated scale.

The controller is configured for verifying if the arrangement between the read head and the graduated scale is the required arrangement, and to that end, is further configured for causing one of the light emitters to first illuminate the graduated scale with a first corresponding light beam and subsequently causing the other light emitter to do so with a second corresponding light beam, for determining the absolute position of the read head from the light received by the detection device due to both light beams, for comparing both determined absolute positions with one another and for determining whether or not the absolute positions are correct depending on the result of said comparison.

Therefore, since both light emitters are spaced from one another, the detection device receives light related to different regions of the graduated scale (one region for each light emitter), in a cost-effective and easy-to-implement manner, whereby it further enables implementing a verification method like the one of the first aspect of the invention, for example. The advantages are therefore analogous to those discussed in connection with the first aspect of the invention.

These and other advantages and features of the invention will become evident in view of the drawings and detailed description of the invention.

### DESCRIPTION OF THE DRAWINGS

Figure 1 schematically shows an embodiment of the device of the invention, configured for making the corresponding comparison based on reflection, the graduated scale of said device being partially shown.
Figure 2a shows an example of the device of Figure 1 for a given separating distance between the two light emitters of said device, where a resulting reference value dependent on said distance is represented.
Figure 2b shows an example of the device of Figure 1 for another given separating distance between the two light emitters of said device, where a resulting reference value dependent on said distance is represented.
Figure 3 shows a partial plan view of the graduated scale of the device of Figure 1, where some opaque marks of said graduated scale are shown.

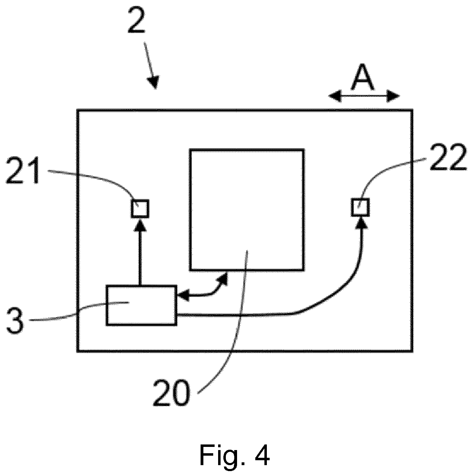

Figure 4 shows a schematic bottom view of the read head of the device of Figure 1.

### DETAILED DISCLOSURE OF THE INVENTION

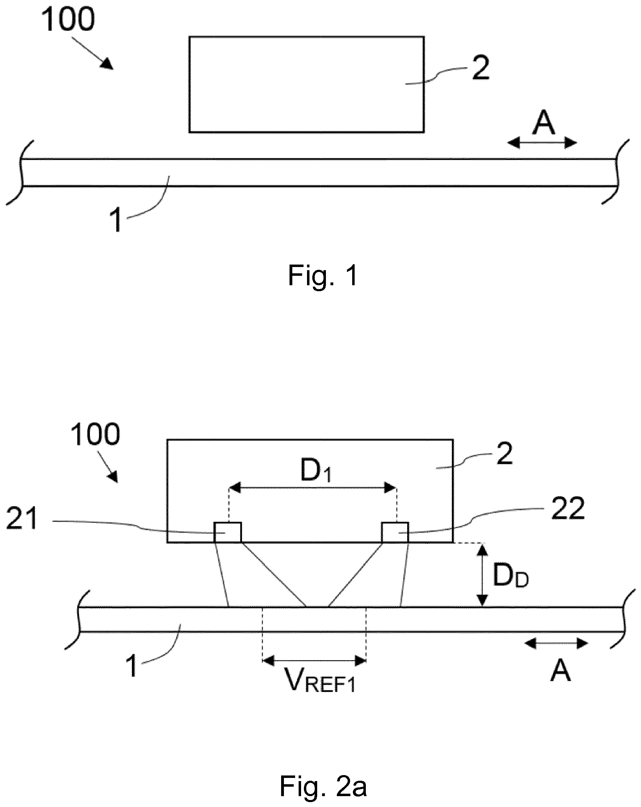

A first aspect of the invention relates to a verification method for an optoelectronic measuring device 100 such as the one shown in Figure 1, for example. The device 100 comprises a graduated scale 1 with a plurality of marks 10 distributed one after another in a measuring direction A and defining different code sequences, and a read head 2 facing the graduated scale 1 which is movable with respect to said graduated scale 1 in the measuring direction A and comprises at least one detection device 20.

The method verifies if the relative arrangement between the read head 2 and the graduated scale 1 is the required arrangement. If it is, the absolute positions that are determined during normal operation of the device 100 will be the correct positions.

The method comprises the steps of:
- emitting a first light beam towards the graduated scale 1 with a first light emitter 21 and determining the absolute position of the read head 2 depending on the light received by the detection device 20 after said first light beam is reflected off the graduated scale 1 (in devices 100 suitable for making the comparison based on reflection) or after it goes through the graduated scale 1 (in devices 100 suitable for making the comparison based on transmission),
- subsequently emitting a second light beam towards the graduated scale 1 with a second light emitter 22 spaced from the first light emitter 21 in the measuring direction A, and determining the absolute position of the read head 2 depending on the light received by the detection device 20 after said second light beam is reflected off the graduated scale 1 (in devices 100 suitable for making the comparison based on reflection) or after it goes through the graduated scale 1 (in devices 100 suitable for making the comparison based on transmission),

- comparing both determined absolute positions with one another, and
- determining if the determined absolute positions are correct depending on said comparison.

These steps take place in the indicated order, and can be implemented just one time or cyclically, as required.

Furthermore, the method enables being implemented in stationary conditions, i.e., with the read head 2 stationary with respect to the graduated scale 1, which even further simplifies the comparison. In any case, it could also be implemented in motion, i.e., with the read head 2 moving with respect to the graduated scale 1, although provided that the movement of the read head 2 between the emission of the first light beam and of the second light beam is small enough, this being a limitation that can be predetermined.

In the method, the comparison between both determined absolute positions is performed by subtracting one from the other, and the subtraction result is compared with a stored value that is dependent on the distance in the measuring direction A between both light emitters 21 and 22. Since the light emitters 21 and 22 are spaced from one another by a given distance, the light beam emitted by them onto the graduated scale 1 illuminates different regions of the graduated scale 1, such that the light received by the detection device 20 in each case will give rise to the determination of different absolute positions. If everything is correct, and therefore the determined absolute positions are correct, the subtraction must coincide with the stored value which is dependent on the distance separating one light emitter 21 from the other light emitter 22, such that by comparing the result of said subtraction with said stored value, it is possible to determine whether or not everything is correct (whether or not the absolute positions have been determined correctly).

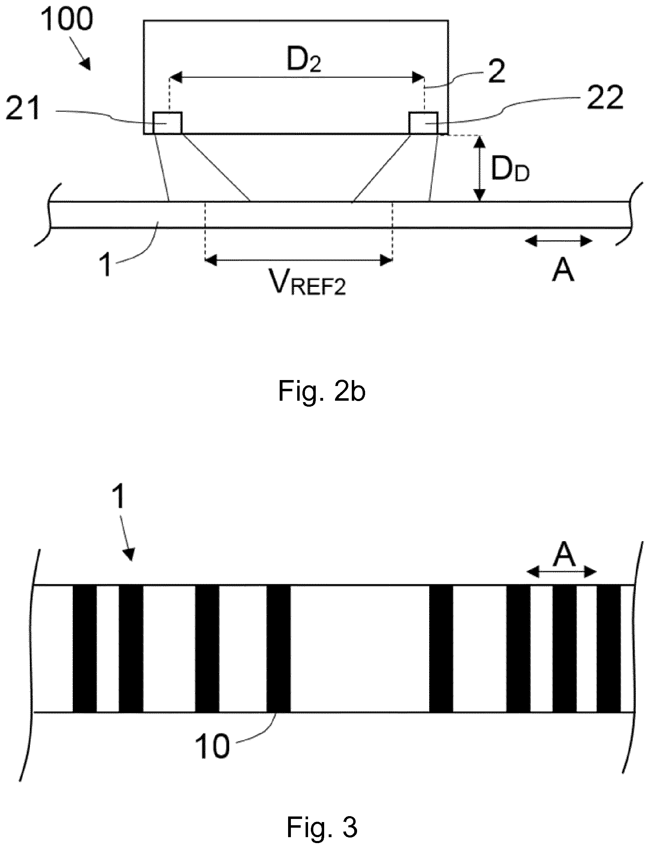

The stored value corresponds to a value that is related to the separating distance in the measuring direction A between the two light emitters 21 and 22, and also to the desired distance D_{D} between the graduated scale 1 and the read head, in a direction perpendicular to the measuring direction A. Since both distances are known, said stored value is predetermined (in house, for example), thereby being stored in the device 100. Figures 2a and 2b show two examples for two different situations (two situations with different separating distances D₁ and D₂ between the two light emitters 21 and 22), where two reference values V_{REF1} and V_{REF2} representing the difference between the two determined absolute positions in each case and corresponding with two different stored values are shown.

In the event that the device 100 is configured for measuring linear movements, in which case the graduated scale 1 is linear, the absolute position relative to a light emitter 21 is preferably determined taking one end of the graduated scale 1 as the origin (the count starting from said end) and the absolute position relative to the other light emitter 22 is preferably determined taking the opposite end of the graduated scale 1 as the origin (the count starting from said opposite end). So, if for any reason the absolute position is determined with some type of offset, this will be reflected in the subtraction result between the two determined absolute positions and the existence of a mistake in the determined absolute positions will be identified. If the same origin is taken into account for calculating both absolute positions, when the subtraction is performed both offsets will cancel out one another and it would mistakenly be interpreted that the absolute positions are correct. In the event that the device 100 is configured for measuring angular movements, in which case the graduated scale 1 would be rotational (a disc, for example), to obtain the same effect the two absolute positions are determined starting from one and the same reference point but in opposite directions, i.e., in one case counting starts at said reference point and continues turning in one direction with respect to the graduated scale 1 until reaching the corresponding absolute position, and in the other case counting starts at said reference point and continues turning in the opposite direction with respect to the graduated scale 1 until reaching the corresponding absolute position.

A second aspect of the invention relates to an optoelectronic measuring device 100, such as the one shown by way of example in Figure 1. The device 100 comprises a graduated scale 1 and a read head 2 facing the graduated scale 1 and movable with respect to said graduated scale 2 in a measuring direction A parallel to the graduated scale 1. The graduated scale 1 comprises a plurality of marks 10 distributed one after another in the measuring direction A, as shown by way of example in Figure 2, defining different code sequences, and the read head 2 comprises at least one detection device 20 shown by way of example in Figure 3, preferably comprising a single CCD (Charge Coupled Device), and a controller 3 communicated with the detection device 20.

The detection device 20 is suitable for receiving a light coming from the graduated scale 1 (which has gone through the graduated scale 1 or, like in the embodiment of Figure 1, is reflected off the graduated scale 1), converts said light into electrical signals which are received by the controller 3, and the controller 3 determines the absolute position of the read head 2 depending on said received electrical signals. The conversion of the light into electrical signals and the processing of said electrical signals to convert them into absolute position are known in the art, therefore they are not explained herein and can be carried out in the device of the invention in the known manner as required.

The marks 10 are of an optical property that is opposite the rest of the graduated scale 1, where they are therefore opaque or transparent, depending on what the rest of said graduated scale 1 is like. Preferably the marks 10 are opaque, whereas the rest of the graduated scale 1 is transparent. Therefore, in the case of the embodiment of Figure 1 the detection device 20 receives the light that is reflected off the marks 10 of the graduated scale 1 and does not receive the light that goes through the other regions of the graduated scale 1 that are transparent.

The read head 2 further comprises at least two light emitters 21 and 22 spaced from one another in the measuring direction A for illuminating the graduated scale 1 with a respective light beam. The detection device 20 is configured for receiving the light emitted by both light emitters 21 and 22 after being reflected off the graduated scale 1 or after going through the graduated scale 1, said light received by the detection device 20 therefore being a reflection of the marks 10 illuminated by the respective light beams.

The detection device 20 converts the received light into a plurality of electrical signals. The device 100 comprises a controller 3 which is communicated with the detection device 20 for receiving the electrical signals generated by the detection device 20 and is configured for determining the absolute position of the read head 2 as a consequence of the received electrical signals.

The controller 3 is configured for verifying if the arrangement between the read head 2 and the graduated scale 1 is the required arrangement. To that end, the controller 3 is communicated with the light emitters 21 and 22 and configured for causing them to emit light in a controlled manner, at least for verifying whether or not the relative arrangement between the read head 2 and the graduated scale 1 is the correct arrangement. In particular, for making said comparison, the controller 3 is configured for causing one of the light emitters 21 to first illuminate the graduated scale 1 and subsequently causing the other light emitter 22 to do so, without them emitting simultaneously, and for determining the absolute position of the read head 2 relative to each of the two illuminations of said graduated scale 1, for comparing both determined absolute positions with one another and for determining whether or not the determined absolute positions are correct depending on the result of said comparison.

The device 100 comprises a memory, which can be integrated in the controller 3, with a stored value that is the distance in the measuring direction A between the two light emitters 21 and 22. The controller 3 is configured for performing a subtraction between both determined absolute positions when the two determined absolute positions are compared, and for determining that said determined absolute positions are correct if the subtraction result between said two determined absolute positions coincides with said stored value (which is the distance in the measuring direction A between the two light emitters 21 and 22). If the distance between the read head 2 and the graduated scale 1 is not the desired distance and/or the read head 2 is not parallel to the graduated scale 1 in the measuring direction A, for example, if the relative arrangement between the read head 2 and the graduated scale 1 is definitively not the correct arrangement, at least one of the determined absolute positions will be changed and the result of the subtraction will differ from the stored value, the existence of a mistake being determined in that case.

The controller 3 is configured for causing the alternating illumination of the two light emitters 21 and 22 for determining the absolute positions of the read head 2 as a result of both illuminations and for determining whether or not the absolute positions are correct depending on the result of said comparison with the read head 2 being stationary with respect to the graduated scale.

In the event that the device 100 is configured for measuring linear movements of the read head 2, the graduated scale 1 and the measuring direction A are linear. The controller 3 is configured for determining the absolute position relative to the marks 10 illuminated by one of the light emitters 21 taking one end of the graduated scale 1 as the origin, and for determining the absolute position relative to the marks 10 illuminated by the other light emitter 21 taking the other end of the graduated scale 1 as the origin. So, if for any reason the absolute position is determined with some type of offset, this will be reflected in the subtraction result between the two determined absolute positions and the existence of a mistake in the determined absolute positions will be identified. If the same origin is taken into account for calculating both absolute positions, when the subtraction is performed both offsets will cancel out one another and it would mistakenly be interpreted that the absolute positions are correct. In the event that the device 100 is configured for measuring angular movements, in which case the graduated scale 1 would be rotational (a disc, for example), to obtain the same effect the controller 3 is configured for determining the absolute position relative to the marks 10 illuminated by one of the light emitters 21 from a reference point, and for determining the absolute position relative to the marks 10 illuminated by the other light emitter 21 starting from the same reference point but in the opposite direction, as explained above for the method.

Preferably, the device 100 comprises a light emitter 21 and 22 on each side of the detection device 20 in the measuring direction A, as shown in Figure 3.

The device 100 is suitable for implementing the method of the first aspect of the invention, so the description provided for the method is also valid for the device 100. Likewise, the method of the invention is suitable for being executed in a device 100 like the one of the second aspect of the invention, so the description provided for the device 100 is also valid for the method.

## Claims

1. Verification method for an optoelectronic measuring device, the device (100) comprising a graduated scale (1) with a plurality of marks (10) distributed one after another in a measuring direction (A) and defining different code sequences, and a read head (2) facing the graduated scale (1) which is movable with respect to said graduated scale (1) in the measuring direction (A) and comprises at least one detection device (20), the method verifying if the arrangement between the read head (2) and the graduated scale (1) of the device (100) is the required arrangement, **characterized in that** the method comprises the steps of
- emitting a first light beam towards the graduated scale (1) with a first light emitter (21) of the read head (2) and determining the absolute position of the read head (2) depending on the light received by the detection device (20) after said first light beam is reflected off, or goes through, the graduated scale (1),
- subsequently emitting a second light beam towards the graduated scale (1) with a second light emitter (22) of the read head (2) that is spaced from the first light emitter (21) in the measuring direction (A), and determining the absolute position of the read head (2) depending on the light received by the detection device (20) after said second light beam is reflected off, or goes through, the graduated scale (1),
- comparing both determined absolute positions, and
- determining if the determined absolute positions are correct depending on said comparison.

2. Verification method according to claim 1, wherein both determined absolute positions are subtracted from one another to compare them, the subtraction result further being compared with a stored value in the device (100) relative to the distance in the measuring direction (A) between both light emitters (21, 22), and both determined absolute positions being determined to be correct if the subtraction result is equal to the stored value.

3. Verification method according to claim 1 or 2, wherein if the graduated scale (1) is linear, the absolute position relative to a light emitter (21) is determined taking one end of the graduated scale (1) as the origin and the absolute position relative to the other light emitter (22) being determined taking the opposite end of the graduated scale (1) as the origin, and if the graduated scale (1) is angular, the absolute position relative to a light emitter (21) is determined starting from a given reference point in an angular direction and the absolute position relative to the other light emitter (22) being determined starting from said given reference point but in the opposite angular direction.

4. Verification method according to any of claims 1 to 3, wherein the method is implemented with the read head (2) being stationary with respect to the graduated scale (1) during said implementation.

5. Optoelectronic measuring device comprising a graduated scale (1) with a plurality of marks (10) distributed one after another in a measuring direction (A) and defining different code sequences, and a read head (2) facing the graduated scale (1) which is movable with respect to said graduated scale (1) in the measuring direction (A) and comprises at least one detection device (20), and a controller (3) communicated with said detection device (20), **characterized in that** the read head (2) further comprises at least two light emitters (21, 22) for illuminating the graduated scale (1) with a respective light beam, which are spaced from one another in the measuring direction (A), the detection device (20) being configured for receiving the light emitted by both light emitters (21, 22) after being reflected off the graduated scale (1) or after going through said graduated scale (1), the controller (3) being configured for verifying if the arrangement between the read head (2) and the graduated scale (1) is the required arrangement, and to that end, said controller (3) being configured for causing one of the light emitters (21) to first illuminate the graduated scale (1) with a first corresponding light beam and subsequently causing the other light emitter (22) to do so with a second corresponding light beam for determining the absolute position of the read head (2) from the light received by the detection device (20) due to both light beams, for comparing both determined absolute positions with one another and for determining whether or not the absolute positions are correct depending on the result of said comparison.

6. Optoelectronic measuring device according to claim 5, comprising a memory with a stored value that is the distance in the measuring direction between the two light emitters (21, 22), the controller (3) being configured for determining that the absolute positions are correct if the subtraction between the two determined absolute positions is equal to the stored value.

7. Optoelectronic measuring device according to claim 5 or 6, wherein the graduated scale (1) is linear, the controller (3) being configured for determining the absolute position relative to one of the light emitters (21) with respect to one end of the graduated scale (1) and for determining the absolute position relative to the other light emitter (22) with respect to the other end of the graduated scale (1).

8. Optoelectronic measuring device according to claim 5 or 6, wherein the graduated scale (1) is angular, the controller (3) being configured for determining the absolute position relative to a light emitter (21) starting from a given reference point in an angular direction and for determining the absolute position relative to the other light emitter (22) starting from said given reference point but in the opposite angular direction.

9. Optoelectronic measuring device according to any of claims 5 to 8, wherein the light emitters (21, 22) are arranged one on each side of the detection device (20) in the measuring direction (A), said detection device (20) therefore being arranged between both light emitters (21, 22).

10. Optoelectronic measuring device according to any of claims 5 to 9, wherein the detection device (20) comprises a single CCD.

## Patentansprüche

1. Verifizierungsverfahren für eine Vorrichtung zur optoelektronischen Messung, wobei die Vorrichtung (100) eine Gradskala (1) mit einer Vielzahl von Markierungen (10), welche hintereinander in einer Messrichtung (A) verteilt sind und unterschiedliche Codesequenzen definieren, und einen Lesekopf (2), welcher der Gradskala (1) zugewandt ist, welcher in Bezug auf die genannte Gradskala (1) in der Messrichtung (A) beweglich ist und mindestens eine Detektionsvorrichtung (20) umfasst, umfasst, wobei das Verfahren verifiziert ob die Anordnung zwischen dem Lesekopf (2) und der Gradskala (1) der Vorrichtung (100) die benötigte Anordnung ist, **dadurch gekennzeichnet, dass** das Verfahren die folgenden Schritte umfasst
- das Abstrahlen eines ersten Lichtstrahls zur Gradskala (1) hin mit einem ersten Lichtemitter (21) des Lesekopfes (2) und das Bestimmen der absoluten Position des Lesekopfes (2) abhängig vom Licht, welches von der Detektionsvorrichtung (20) empfangen wird, nachdem der genannte erste Lichtstrahl von der Gradskala (1) reflektiert wird oder dadurch geht,
- das anschließende Abstrahlen eines zweiten Lichtstrahls zur Gradskala hin (1) mit einem zweiten Lichtemitter (22) des Lesekopfes (2), welcher vom ersten Lichtemitter (21) in der Messrichtung (A) beabstandet ist, und das Bestimmen der absoluten Position des Lesekopfes (2) abhängig vom Licht, welches von der Detektionsvorrichtung (20) empfangen wird, nachdem der genannte zweite Lichtstrahl von der Gradskala (1) reflektiert wird oder dadurch geht,
- das Vergleichen beider bestimmten absoluten Positionen, und
- das Bestimmen ob die bestimmten absoluten Positionen richtig sind, abhängig vom genannte Vergleich.

2. Verifizierungsverfahren nach Anspruch 1, wobei beide bestimmten absoluten Positionen voneinander subtrahiert werden, um sie zu vergleichen, wobei das Subtraktionsergebnis zusätzlich mit einem in der Vorrichtung (100) gespeicherten Wert bezüglich des Abstandes in der Messrichtung (A) zwischen beiden Lichtemittern (21, 22) verglichen wird, und wobei beide bestimmten absoluten Positionen als richtig bestimmt werden, wenn das Subtraktionsergebnis dem gespeicherten Wert gleich ist.

3. Verifizierungsverfahren nach Anspruch 1 oder 2, wobei, wenn die Gradskala (1) geradlinig ist, die absolute Position bezüglich eines Lichtemitters (21) bestimmt wird, indem ein Ende der Gradskala (1) als der Anfang genommen wird, und die absolute Position bezüglich des anderen Lichtemitters (22) bestimmt wird, indem das entgegengesetzte Ende der Gradskala (1) als Anfang genommen wird, und, wenn die Gradskala (1) winkelförmig ist, die absolute Position bezüglich eines Lichtemitters (21) ausgehend von einem gegebenen Referenzpunkt in einer Winkelrichtung bestimmt wird und die absolute Position bezüglich des anderen Lichtemitters (22) ausgehend vom gegebenen Referenzpunkt, aber in der entgegengesetzten Winkelrichtung, bestimmt wird.

4. Verifizierungsverfahren nach einem der Ansprüche 1 bis 3, wobei das Verfahren derart implementiert wird, dass der Lesekopf (2) während der genannten Implementierung in Bezug auf die Gradskala (1) ortsfest ist.

5. Vorrichtung zur optoelektronischen Messung umfassend eine Gradskala (1) mit einer Vielzahl von Markierungen (10), welche hintereinander in einer Messrichtung (A) verteilt sind und unterschiedliche Codesequenzen definieren, und einen Lesekopf (2), welcher der Gradskala (1) zugewandt ist, welcher in Bezug auf die genannte Gradskala (1) in der Messrichtung (A) beweglich ist und mindestens eine Detektionsvorrichtung (20) und eine Steuerung (3), welche mit der genannten Detektionsvorrichtung (20) kommuniziert, umfasst, **dadurch gekennzeichnet, dass** der Lesekopf (2) zusätzlich mindestens zwei Lichtemitter (21, 22) für die Beleuchtung der Gradskala (1) mit einem jeweiligen Lichtstrahl umfasst, welche voneinander in der Messrichtung (A) beabstandet sind, wobei die Detektionsvorrichtung (20) dazu ausgebildet ist, das von beiden Lichtemittern (21, 22) abgestrahlte Licht, nachdem es von der Gradskala (1) reflektiert wird oder nachdem es durch die genannte Gradskala (1) geht, zu empfangen, wobei die Steuerung (3) dazu ausgebildet ist, zu verifizieren ob die Anordnung zwischen dem Lesekopf (2) und der Gradskala (1) die benötigte Anordnung ist, und wobei zu diesem Zweck die genannte Steuerung (3) dazu ausgebildet ist, zu bewirken, dass einer der Lichtemitter (21) zunächst die Gradskala (1) mit einem ersten entsprechenden Lichtstrahl beleuchtet und zu bewirken, dass anschließend der andere Lichtemitter (22) das gleiche mit einem zweiten entsprechend Lichtstrahl macht, um die absolute Position des Lesekopfes (2) aus dem von der Detektionsvorrichtung (20) aufgrund beider Lichtstrahlen empfangenen Licht zu bestimmen, um beide bestimmten absoluten Positionen miteinander zu vergleichen und um zu bestimmen, ob die absoluten Positionen richtig sind oder nicht, abhängig vom Ergebnis des genannten Vergleichs.

6. Vorrichtung zur optoelektronischen Messung nach Anspruch 5, umfassend einen Speicher mit einem gespeicherten Wert, welcher der Abstand in der Messrichtung zwischen den zwei Lichtemittern (21, 22) ist, wobei die Steuerung (3) dazu ausgebildet ist, zu bestimmen, dass die absoluten Positionen richtig sind, wenn die Subtraktion zwischen den zwei bestimmten absoluten Positionen dem gespeicherten Wert gleich sind.

7. Vorrichtung zur optoelektronischen Messung nach Anspruch 5 oder 6, wobei die Gradskala (1) geradlinig ist, wobei die Steuerung (3) dazu ausgebildet ist, die absolute Position bezüglich eines der Lichtemitter (21) in Bezug auf ein Ende der Gradskala (1) zu bestimmten und die absolute Position bezüglich des anderen Lichtemitters (22) in Bezug auf das andere Ende der Gradskala (1) zu bestimmen.

8. Vorrichtung zur optoelektronischen Messung nach Anspruch 5 oder 6, wobei die Gradskala (1) winkelförmig ist, wobei die Steuerung (3) dazu ausgebildet ist, die absolute Position bezüglich eines Lichtemitters (21) ausgehend von einem gegebenen Referenzpunkt in einer Winkelrichtung zu bestimmen und die absolute Position bezüglich des anderen Lichtemitters (22) ausgehend von dem genannten gegebenen Referenzpunkt, aber in der entgegengesetzten Winkelrichtung, zu bestimmen.

9. Vorrichtung zur optoelektronischen Messung nach einem der Ansprüche 5 bis 8, wobei die Lichtemitter (21, 22) jeweils an jeder Seite der Detektionsvorrichtung (20) in der Messrichtung (A) angeordnet sind, wobei die genannte Detektionsvorrichtung (20) daher zwischen beiden Lichtemittern (21, 22) angeordnet ist.

10. Vorrichtung zur optoelektronischen Messung nach einem der Ansprüche 5 bis 9, wobei die Detektionsvorrichtung (20) ein einziges CCD umfasst.

## Revendications

1. Procédé de vérification pour un dispositif de mesure optoélectronique, le dispositif (100) comprenant une échelle graduée (1) avec une pluralité de marques (10) distribuées les unes après les autres dans une direction de mesure (A) et définissant des séquences de codes différentes, et une tête de lecture (2) en regard de l'échelle graduée (1) qui est mobile par rapport à ladite échelle graduée (1) dans la direction de mesure (A) et comprend au moins un dispositif de direction (20), le procédé vérifiant si l'aménagement entre la tête de lecture (2) et l'échelle graduée (1) du dispositif (100) est l'aménagement requis, **caractérisé en ce que** le procédé comprend les étapes de
- l'émission d'un premier faisceau lumineux vers l'échelle graduée (1) avec un premier émetteur lumineux (21) de la tête de lecture (2) et la détermination de la position absolue de la tête de lecture (2) en fonction de la lumière reçue par le dispositif de détection (20) après que ledit premier faisceau lumineux est réfléchi, ou a traversé l'échelle graduée (1),
- l'émission postérieure d'un second faisceau lumineux vers échelle graduée (1) avec un second émetteur lumineux (22) de la tête de lecture (2) qui est espacé du premier émetteur lumineux (21) dans la direction de mesure (A), et la détermination de la position absolue de la tête de lecture (2) en fonction de la lumière reçue par le dispositif de détection (20) après que ledit second faisceau lumineux est réfléchi ou a traversé l'échelle graduée (1),
- la comparaison des deux positions déterminées, et
- la détermination de si les positions absolues déterminées sont correctes en fonction de ladite comparaison.

2. Procédé de vérification selon la revendication 1, dans lequel les deux positions absolues déterminées sont soustraites l'une de l'autre pour les comparer, le résultat de la soustraction étant en outre comparé à une valeur stockée dans le dispositif (100) par rapport à la distance dans la direction de mesure (A) entre les deux émetteurs lumineux (21, 22), et les deux positions absolues déterminées étant déterminées pour être corrigées si le résultat de la soustraction est égal à la valeur stockée.

3. Procédé de vérification selon la revendication 1 ou 2, dans lequel si l'échelle graduée (1) est linéaire, la position absolue par rapport à un émetteur lumineux (21) est déterminée en prenant une extrémité de l'échelle graduée (1) comme la position d'origine et la position absolue par rapport à l'autre émetteur lumineux (21) étant déterminée en prenant l'extrémité opposée de l'échelle graduée (1) comme l'origine, et si l'échelle graduée (1) est angulaire, la position absolue par rapport à un émetteur lumineux (21) est déterminée en commençant à partir d'un point de référence donné dans une direction angulaire et la position angulaire par rapport à l'autre émetteur lumineux (22) étant déterminée à partir dudit point de référence donné mais dans la direction angulaire opposée.

4. Procédé de vérification selon l'une quelconque des revendications 1 à 3, dans lequel le procédé est mis en oeuvre avec la tête de lecture (2) étant stationnaire par rapport à l'échelle graduée (1) pendant ladite mise en oeuvre.

5. Dispositif de mesure optoélectronique comprenant une échelle graduée (1) avec une pluralité de marques (10) distribuées les unes après les autres dans une direction de mesure (A) et définissant des séquence de code différents, et une tête de lecture (2) en regard de l'échelle graduée (1) qui est mobile par rapport à ladite échelle graduée (1) dans la direction de mesure (A) et comprend au moins un dispositif de détection (20), et un contrôleur (3) communiqué avec ledit dispositif de détection (20), **caractérisé en ce que** la tête de lecture (2) comprend en outre au moins deux émetteurs lumineux (21, 22) pour illuminer l'échelle graduée (1) avec un faisceau lumineux respectif, qui sont séparés l'un de l'autre dans la direction de mesure (A), le dispositif de détection (20) étant configuré pour recevoir la lumière émise par les deux émetteurs lumineux (21, 22) après être réfléchie de l'échelle graduée (1) ou après avoir traversée ladite échelle graduée (1), le contrôleur (3) étant configuré pour vérifier si l'aménagement entre la tête de lecture (2) et l'échelle graduée (1) est l'aménagement requis, et à cette fin, ledit contrôleur (3) étant configuré pour faire un des émetteurs lumineux (21) illuminer en premier lieu l'échelle graduée (1) avec un premier faisceau lumineux correspondant et pour faire que postérieurement faire l'autre émetteur lumineux (22) faire ainsi avec un second faisceau lumineux correspondant pour déterminer la position absolue de la tête de lecture (2) à partir de la lumière reçue par le dispositif de détection (20) dû aux deux faisceaux lumineux, pour comparer les deux positions absolues déterminées l'une avec l'autre et pour déterminer si les positions absolues sont correctes ou non en fonction du résultat de ladite comparaison.

6. Dispositif de mesure optoélectronique selon la revendication 5, comprenant une mémoire avec une valeur stockée qui est la distance dans la direction de mesure entre les deux émetteurs lumineux (21, 22), le contrôleur (3) étant configuré pour déterminer que les positions absolues sont correctes si la soustraction entre les deux positions absolues déterminées est égale à la valeur stockée.

7. Dispositif de mesure optoélectronique selon la revendication 5 ou 6, dans lequel l'échelle graduée (1) est linéaire, le contrôleur (3) étant configuré pour déterminer la position absolue par rapport à un des émetteurs lumineux (21) par rapport à une extrémité de l'échelle graduée (1) et pour déterminer la position absolue par rapport à l'autre émetteur lumineux (22) par rapport à l'autre extrémité de l'échelle graduée (1).

8. Dispositif de mesure optoélectronique selon la revendication 5 ou 6, dans lequel l'échelle graduée (1) est angulaire, le contrôleur (3) étant configuré pour déterminer la position absolue par rapport à un émetteur lumineux (21) partant d'un point de référence donné dans une direction angulaire et pour déterminer la position absolue par rapport à l'autre émetteur lumineux (22) partant dudit point de référence donné mais dans la direction angulaire opposée.

9. Dispositif de mesure optoélectronique selon l'une quelconque des revendications 5 à 8, dans lequel les émetteurs lumineux (21, 22) sont aménagés l'un de chaque côté du dispositif de détection (20) dans la direction de mesure (A), ledit dispositif de détection (20) étant alors aménagé entre les deux émetteurs lumineux (21, 22).

10. Dispositif de mesure optoélectronique selon l'une quelconque des revendications 5 à 9, dans lequel le dispositif de détection (20) comprend un seul dispositif à couplage de charge (CCD).
